(19) Europäisches Patentamt
European Patent Office
Office européen des brevets

(11) **EP 4 177 980 A1**

(12) **EUROPEAN PATENT APPLICATION**
published in accordance with Art. 153(4) EPC

(43) Date of publication:
**10.05.2023 Bulletin 2023/19**

(21) Application number: **21854220.7**

(22) Date of filing: **06.08.2021**

(51) International Patent Classification (IPC):
$H01M\ 4/02^{(2006.01)}$    $H01M\ 4/06^{(2006.01)}$
$H01M\ 4/13^{(2010.01)}$    $H01M\ 4/24^{(2006.01)}$
$H01M\ 4/42^{(2006.01)}$    $H01M\ 4/66^{(2006.01)}$
$H01M\ 4/80^{(2006.01)}$    $H01M\ 10/04^{(2006.01)}$
$H01M\ 10/28^{(2006.01)}$    $H01M\ 6/04^{(2006.01)}$
$H01M\ 6/12^{(2006.01)}$    $H01M\ 6/14^{(2006.01)}$
$H01M\ 50/44^{(2021.01)}$    $H01M\ 50/489^{(2021.01)}$
$H01M\ 50/491^{(2021.01)}$

(52) Cooperative Patent Classification (CPC):
H01M 4/02; H01M 4/06; H01M 4/13; H01M 4/24;
H01M 4/42; H01M 4/66; H01M 4/80; H01M 6/04;
H01M 6/12; H01M 6/14; H01M 10/04; H01M 10/28;
H01M 50/44; H01M 50/489; H01M 50/491; (Cont.)

(86) International application number:
**PCT/JP2021/029268**

(87) International publication number:
**WO 2022/030611 (10.02.2022 Gazette 2022/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2020 JP 2020133715
31.03.2021 JP 2021059807**

(71) Applicant: **Maxell, Ltd.
Kyoto 618-8525 (JP)**

(72) Inventors:
• **FURUTANI, Takahiro
Otokuni-gun, Kyoto 618-8525 (JP)**
• **INOUE, Yusuke
Otokuni-gun, Kyoto 618-8525 (JP)**

(74) Representative: **Diehl & Partner
Patent- und Rechtsanwaltskanzlei mbB
Erika-Mann-Straße 9
80636 München (DE)**

(54) **BATTERY**

(57)    A cell with excellent load characteristics is provided.

The cell of the present invention includes a positive electrode, a negative electrode, and a separator interposed between the positive electrode and the negative electrode. The positive electrode includes a porous carbon sheet and a positive electrode active material layer containing a positive electrode active material that is held in pores of the porous carbon sheet. It is preferable that the positive electrode active material layer covers the surface of the porous carbon sheet facing the separator, that a part of the positive electrode active material layer is held in the pores of the porous carbon sheet, and that the surface of the positive electrode active material layer facing the separator has an arithmetic average roughness (Ra) of 10 pm or less or a maximum height roughness (Rz) of 50 pm or less.

FIG. 2

**(Cont. next page)**

(52) Cooperative Patent Classification (CPC): (Cont.)
Y02E 60/10; Y02P 70/50

**Description**

Technical Field

The present invention relates to a cell with excellent load characteristics.

Background Art

Primary cells and secondary cells have been used for, e.g., power supplies of various devices. The primary cells and the secondary cells are generally cylindrical or flat in shape. The flat shape is called as coin type or button type. A cylindrical primary or secondary cell includes a wound electrode body in which a positive electrode and a negative electrode are stacked via a separator and spirally wound, and the wound electrode body is placed in a cylindrical metal container. A flat primary or secondary cell includes a laminated electrode body in which a positive electrode and a negative electrode are laminated via a separator, and the laminated electrode body is placed in a flat metal container.

In recent years, it has been a request to use the cells in applications such as thin electronic devices, in which their metal containers could be difficult to apply. To meet such requirements, a sheet-type cell with an exterior case made of a laminated film has also been developed.

This type of cell is a so-called printed cell (see Patent Documents 1 to 3). In assembling a printed cell, a current collector is formed by, e.g., applying a conductive paste to the surface of a base material (such as a plastic film) that constitutes the exterior case, and then a layer containing an active material etc. (i.e., an active material layer) is disposed on the coating of the conductive paste to form an electrode.

However, the conductive paste coating is in contact with only one side of the active material layer and contains an insulating binder so as to keep its shape or the like. Therefore, when the above electrode is used in the sheet-type cell, it is difficult to reduce a resistance of the electrode in which the coating serves to collect the current. This increases the internal resistance of the cell, resulting in poor load characteristics.

Prior Art Documents

Patent Documents

Patent Document 1: JP 2008-535194 A
Patent Document 2: JP 2010-45047 A
Patent Document 3: JP H5(1993)-217587 A

Disclosure of Invention

Problem to be Solved by the Invention

The present invention has been made in view of the above circumstances and aims to provide a cell with excellent load characteristics.

Means for Solving Problem

A cell of the present invention includes a positive electrode, a negative electrode, and a separator interposed between the positive electrode and the negative electrode. The positive electrode includes a porous carbon sheet and a positive electrode active material layer containing a positive electrode active material that is held in pores of the porous carbon sheet.

In a preferred aspect of the cell of the present invention, the positive electrode active material layer covers the surface of the porous carbon sheet facing the separator, and a part of the positive electrode active material layer is held in the pores of the porous carbon sheet. The surface of the positive electrode active material layer facing the separator has an arithmetic average roughness (Ra) of 10 pm or less or a maximum height roughness (Rz) of 50 pm or less.

Effects of the Invention

The present invention can provide a cell with excellent load characteristics.

Brief Description of Drawing

[FIG. 1] FIG. 1 is a plan view schematically illustrating an example of a cell of the present invention.
[FIG. 2] FIG. 2 is a cross-sectional view taken along the line I-I of FIG. 1.
[FIG. 3] FIG. 3 is a graph showing the results of the measurement of the amount of gas generated from zinc foils.
[FIG. 4] FIG. 4 is a graph showing the results of the evaluation of the discharge characteristics of sheet-type air cells for evaluating discharge characteristics.

Description of the Invention

A cell of the present invention includes a positive electrode that includes a porous carbon sheet and a positive electrode active material layer containing a positive electrode active material, and a separator. The positive electrode active material layer contains the positive electrode active material that is held in the pores of the porous carbon sheet. In other words, at least a part of the positive electrode active material layer containing the positive electrode active material is formed in the pores of the porous carbon sheet and held by the porous carbon sheet.

It is preferable that the positive electrode active material layer covers the surface of the porous carbon sheet facing the separator, that a part of the positive electrode active material layer is held in the pores of the porous carbon sheet, and that the surface roughness of the surface of the positive electrode active material layer facing the separator is 10 pm or less for the arithmetic average roughness (Ra) or 50 pm or less for the maximum height roughness (Rz).

In order to reduce the internal resistance and improve the load characteristics of the cell, electron conductivity and ion conductivity in each electrode should be improved, and the ion conductivity between the electrodes (between the positive electrode and the negative electrode) should also be improved.

In the cell of the present invention, the type of the separator is not limited and can be of, e.g., a material with large pores such as a nonwoven fabric. The separator made of the material with large pores has a higher ion permeability and thus can further improve the ion conductivity between the electrodes in comparison with a separator made of a resin microporous film or an ion-permeable film (e.g., cellophane film) having no hole (pore), which are commonly used for cells.

In many cases, each electrode of the cell includes a current collector. The current collector is generally of a metal foil, and a layer containing the active material can be disposed on the surface of the metal foil. When the porous carbon sheet is used as a current collector, the active material can be held in the pores of the porous carbon sheet. Thus, the distance between the active material and the current collector is smaller in the electrode including the porous carbon sheet than in the electrode including the metal foil. For this reason, the use of the porous carbon sheet is expected to improve the electron conductivity in the electrode.

It is more difficult to reduce a thickness of the porous carbon sheet than to reduce a thickness of, e.g., the metal foil. Moreover, the density of the porous carbon sheet is low. Therefore, when the porous carbon sheet is used as a current collector, the ratio of the current collector to the internal volume of the cell tends to increase compared to the metal foil. This puts the porous carbon sheet at a disadvantage in terms of improving the energy density of the cell. However, since the electrode has the active material held in the pores of the porous carbon sheet, the density of the entire electrode can be increased, making it possible to prevent a decrease in the energy density of the cell due to a large thickness of the current collector.

On the other hand, when the active material of the electrode is entirely held in the pores of the porous carbon sheet, the surface unevenness of the electrode becomes relatively large. This may be because the end portion of a carbon material (e.g., fibrous carbon) of the porous carbon sheet partially protrudes from the surface of the electrode. Such an electrode will have no problem when combined with the separator made of, e.g., a cellophane film, but might cause a short circuit upon contact with the counter electrode when combined with the separator having relatively large pores (e.g., the separator made of a nonwoven fabric).

In this case, a part of the positive electrode active material layer containing the positive electrode active material can be held in the pores of the porous carbon sheet, and the rest of the positive electrode active material layer can be formed to cover the surface of the porous carbon sheet facing the separator so that the surface roughness of the positive electrode active material layer is as small as 10 pm or less for the arithmetic average roughness (Ra) or 50 pm or less for the maximum height roughness (Rz). Thus, even if the positive electrode including the porous carbon sheet is combined with the separator having large pores (e.g., the separator made of a nonwoven fabric), it is possible not only to reduce the occurrence of a short circuit to a high degree, but also to achieve both a reduction in the internal resistance and an improvement in the load characteristics.

The cell of the present invention may be in the form of a cell including, as an electrolyte, an electrolyte solution that is an aqueous solution containing water as a solvent (e.g., an alkaline cell such as an alkaline primary cell or an alkaline secondary cell, a manganese cell, or an air cell). The cell of the present invention may also be in the form of a cell including, as an electrolyte, a nonaqueous electrolyte containing a nonaqueous solvent (e.g., a nonaqueous electrolyte cell such as a nonaqueous electrolyte primary cell or a nonaqueous electrolyte secondary cell).

<Positive electrode>

The positive electrode of the cell includes the porous carbon sheet and the positive electrode active material layer containing the positive electrode active material.

When the cell is an alkaline cell, examples of the positive electrode active material include silver oxides (such as silver (I) oxide and silver (II) oxide), manganese oxides such as manganese dioxide, nickel oxyhydroxide, and composite oxides of silver and cobalt, nickel, or bismuth. When the cell is a manganese cell, examples of the positive electrode active material include manganese oxides such as manganese dioxide.

When the cell is a nonaqueous electrolyte cell, examples of the positive electrode active material include the following: manganese dioxide; vanadium oxide; niobium oxide; titanium oxide; sulfides such as iron disulfide; graphite fluoride; and various types of lithium-containing composite oxides including, e.g., lithium-containing manganese oxides such as $Li_xMn_3O_6$ (0 < x < 2) and $Li_xMnO_2$ (0 < x < 1), composite oxides having a spinel structure such as $Li_xTi_{5/3}O_4$ ($4/3 \leq x < 7/3$), $LiMn_2O_4$, and a composite oxide obtained by substituting a part of the elements of $LiMn_2O_4$ with another element, lithium-containing composite oxides having a layered structure expressed as $Li_{1+x}M^1O_2$ (- 0.1 < x < 0.1, $M^1$: Co, Ni, Mn, Al, Mg, etc.), and olivine-type compounds expressed as $LiM^2PO_4$ ($M^2$: Co, Ni, Mn, Fe, etc.).

Examples of the lithium-containing composite oxides having the layered structure include the following: lithium cobalt oxide such as $LiCoO_2$; $LiNi_{1-a}Co_{a-b}Al_bO_2$ ($0.1 \leq a \leq 0.3$, $0.01 \leq b \leq 0.2$); and oxides containing at least Co, Ni, and Mn (such as $LiMn_{1/3}Ni_{1/3}Co_{1/3}O_2$, $LiMn_{5/12}Ni_{5/12}Co_{1/6}O_2$, and $LiNi_{3/5}Mn_{1/5}Co_{1/5}O_2$).

The average particle size of the positive electrode active material is preferably 30 pm or less, and more preferably 20 pm or less in terms of facilitating the filling of the pores of the porous carbon sheet with the active material and reducing the surface roughness of the surface of the positive electrode facing the separator, i.e., the surface roughness of the surface of the positive electrode active material layer facing the separator, where the positive electrode active material layer covers the surface of the porous carbon sheet. Moreover, the average particle size of the positive electrode active material is preferably 0.1 $\mu$m or more, and more preferably 1 $\mu$m or more so that the positive electrode active material can easily be dispersed in a coating material (which is a composition for forming a positive electrode active material layer and contains a solvent, as will be described later). The positive electrode active material may be either primary particles or secondary particles formed by the aggregation of primary particles.

In this specification, the average particle size of the positive electrode active material and the particle size of zinc-based particles, as will be described later, are measured with a laser scattering particle size distribution analyzer (e.g., "LA-920" manufactured by HORIBA, Ltd.) by dispersing particles in a medium that does not dissolve the particles. The average particle size means a particle diameter ($D_{50}$) at a cumulative frequency of 50% in the volume-based distribution.

The positive electrode active material layer may contain only the positive electrode active material or may contain other components in addition to the positive electrode active material. Such components can include, e.g., a conductive assistant and a binder. In other words, the positive electrode active material layer is made of a positive electrode mixture containing the positive electrode active material and, e.g., the conductive assistant and/or the binder.

Examples of the conductive assistant include the following: carbon materials such as natural graphite, carbon blacks such as acetylene black, Ketjen black, channel black, furnace black, lamp black, and thermal black, and carbon fibers; conductive fibers such as metallic fibers; fluorocarbon; metal powders of copper, nickel, etc.; and organic conductive materials such as polyphenylene derivatives.

Examples of the binder include the following: water-insoluble resins such as acrylic resin (e.g., polyacrylic acid ester), polyvinylidene fluoride (PVDF), polytetrafluoroethylene (PTFE), and styrene-butadiene rubber (SBR); and water-soluble resins such as polyacrylates (e.g., sodium polyacrylate and ammonium polyacrylate), carboxymethyl cellulose (CMC), polyvinyl alcohol (PVA), and poly N-vinylacetamide (PNVA).

If the binder is contained along with the positive electrode active material in the pores of the porous carbon sheet, which serves as a current collector, the effect of reducing the resistance value of the positive electrode can be reduced. Therefore, the binder content is preferably as low as possible, and more preferably zero at least in the portion of the positive electrode active material layer that is to be held in the pores of the porous carbon sheet.

The porous carbon sheet used for the positive electrode functions as a current collector, as described above. When the electrolyte solution of the cell is, e.g., an aqueous solution of pH of 12 or less, particularly an acidic aqueous solution, a current collector if it is made of metal (though depending on its material) can be corroded by the electrolyte solution. However, there is no such concern with the current collector made of the porous carbon sheet. Thus, the use of the porous carbon sheet allows the cell to have a greater variety of configurations.

The porous carbon sheet is preferably a porous sheet made of fibrous carbon such as carbon paper, carbon cloth, or carbon felt. These sheets can be of a single layer structure or a multilayer structure. The multilayer structure can be composed of, e.g., pieces of carbon paper, pieces of carbon cloth, or pieces of carbon felt. Alternatively, the multilayer structure can be composed of, e.g., pieces of two or more types of carbon paper, carbon cloth, and carbon felt. Moreover, a porous sheet made of expanded graphite can be used as the porous carbon sheet.

The fiber diameter of the fibrous carbon of the porous sheet is preferably 2 to 30 pm in view of, e.g., conductive properties.

The thickness of the porous carbon sheet is preferably 0.5 mm or less in terms of further improving the energy density of the cell. The lower limit of the thickness of the porous carbon sheet is usually 0.05 mm in view of, e.g., handleability, ease of availability, a sufficient cell reaction in the positive electrode, and reliable current collection function.

The porosity of the porous carbon sheet is preferably 50% or more and 95% or less in terms of satisfactorily holding the positive electrode active material layer and ensuring sufficient strength.

The porous carbon sheet may be selected from commercially available products that satisfy the above physical properties.

The positive electrode active material layer of the positive electrode has at least a portion that is formed in the pores of the porous carbon sheet, and preferably also has a portion that is formed on the outside of the porous carbon sheet and covers the surface of the porous carbon sheet.

The surface roughness of the surface of the positive electrode facing the separator, which is the surface of the positive electrode active material layer that covers the porous carbon sheet and is on the opposite side of the separator to the negative electrode, is preferably 10 pm or less, and more preferably 5 pm or less for the arithmetic average roughness (Ra) or is preferably 50 pm or less, and more preferably 25 pm or less for the maximum height roughness (Rz). Thus, even if the positive electrode is combined with the separator having large pores (e.g., the separator made of a nonwoven fabric), the occurrence of a short circuit of the cell can be reduced. The lower limit of the surface roughness of the surface of the positive electrode facing the separator can be different depending on the average particle size of the positive electrode active material, and is usually about 0.5 pm for the arithmetic average roughness (Ra) or about 3 pm for the maximum height roughness (Rz).

In this specification, the surface roughness of the surface of the positive electrode facing the separator means the arithmetic average roughness (Ra) or the maximum height roughness (Rz) specified in the Japanese Industrial Standards (JIS) B 0601 (2013). Specifically, the arithmetic average roughness (Ra) is determined in the following manner. Using a confocal laser scanning microscope ("Real Time Scanning Laser Microscope 1LM-21D" manufactured by Lasertec Corporation), four fields of view, each having $90 \ \mu m \times 90 \ \mu m$, are observed with a magnification of 50X. Then, the absolute value of each point from the mean line is measured at $900 \times 900$ pixels for each of the four fields of view, and the arithmetic average of the absolute values in the corresponding field of view is calculated. Further, the arithmetic average of the resulting values (averages) of the four fields of view is calculated. The maximum height roughness (Rz) is determined in the following manner. The sum of the maximum profile peak height and the maximum profile valley depth is measured for each of the four fields of view under the same conditions as described above. Then, the arithmetic average of the resulting values (sums) of the four fields of view is calculated.

It is preferable that all the pores of the porous carbon sheet are filled with the positive electrode active material in terms of increasing the amount of the positive electrode active material to be introduced into the cell as much as possible, and further improving the energy density of the cell. However, even if only some of the pores of the porous carbon sheet, e.g., only the pores in the region accounting for about 10% of the total thickness of the porous carbon sheet are filled with the positive electrode active material, the internal resistance can be lowered to improve the load characteristics.

The portion of the positive electrode active material layer preferably covers the surface of the porous carbon sheet to prevent the protrusion of fibers of the carbon sheet from the positive electrode active material layer. The thickness of the portion of the positive electrode active material layer covering the surface of the porous carbon sheet is not particularly limited. The larger the thickness, the less effective the porous carbon sheet tends to be in improving the electron conductivity of the positive electrode. Therefore, the thickness of the portion of the positive electrode active material layer covering the surface of the porous carbon sheet is preferably, e.g., 50 pm or less, and more preferably 30 pm or less in terms of further improving the electron conductivity of the positive electrode.

The positive electrode can be produced in the following manner. For example, a composition (paste, slurry, etc.) for forming a positive electrode active material layer is prepared by dispersing the positive electrode active material and optionally the conductive assistant, the binder, or the like in a solvent. Then, the composition is applied to the porous carbon sheet and dried to form a positive electrode active material layer, which is further subjected to pressing as needed.

Examples of the solvent used for the composition for forming a positive electrode active material layer include water, an aqueous organic solvent such as ethanol, and a nonaqueous organic solvent such as N-methyl-2-pyrrolidone (NMP).

The porous carbon sheet is usually water-repellent. For this reason, when water or the aqueous solvent (e.g., ethanol) is used as a solvent to prepare the composition for forming a positive electrode active material layer, the composition cannot easily penetrate into the pores after it has been applied to the porous carbon sheet.

Therefore, it is preferable that the affinity of the composition containing water or the aqueous solvent for the porous carbon sheet is enhanced by further adding, e.g., a surfactant to the composition. This allows the composition to penetrate more successfully into the pores of the porous carbon sheet.

The surfactant used to enhance the affinity of the composition for the porous carbon sheet may be any of a cationic surfactant, an anionic surfactant, a nonionic surfactant, and an amphoteric surfactant. Examples of the surfactant include polyoxyethylene nonylphenyl ether, polyoxyethylene octylphenyl ether, sulfonates of higher fatty acid esters, and fluorine-based surfactants such as perfluoroalkyl carboxylic acid, perfluoroalkyl sulfonic acid, and oxyethylene perfluoroalkyl ether.

The amount of the surfactant in the composition for forming a positive electrode active material layer is preferably 0.3% by mass or more in view of enhancing the affinity of the composition for the porous carbon sheet and facilitating the penetration of the composition into the pores of the porous carbon sheet. However, there is a possibility that the surfactant remains in the positive electrode active material layer formed and acts as a resistance component. Thus, the smaller the amount of the surfactant, the better. The amount of the surfactant in the composition is preferably, e.g., 5% by mass or less.

The total content of all components (including the surfactant, if any), except for the solvent, in the composition for forming a positive electrode active material layer is usually 20 to 50% by mass.

Two types of compositions (A) and (B) for forming a positive electrode active material layer can be separately prepared and used. The composition (A) contains a surfactant in order to penetrate into the pores of the porous carbon sheet. The composition (B) does not contain a surfactant and is configured to cover the surface of the porous carbon sheet. In this case, some surfactant can move from the portion of the positive electrode active material layer that is held in the pores of the porous carbon sheet during the formation of the positive electrode active material layer. However, since the positive electrode active material layer covering the surface of the porous carbon sheet is substantially free of a surfactant, the total amount of the surfactant that may act as a resistance component in the positive electrode active material layer can be reduced further.

The composition (A) and the composition (B) can be either the same components (except for the presence or absence of a surfactant) or different components as desired. For example, the composition (A) can contain the positive electrode active material, the surfactant, and the solvent and the composition (B) can contain the positive electrode active material, the solvent, and the conductive assistant and/or the binder. The amount of the surfactant in the composition (A) may be 0.3% by mass or more and 5% by mass or less, as described above.

The composition (A) that is to penetrate into the pores of the porous carbon sheet is not limited to one type, and may be a combination of two or more types of compositions with different components as desired. Moreover, the composition (B) that is to cover the surface of the porous carbon sheet is not limited to one type, and may be a combination of two or more types of compositions with different components as desired.

The amount of the positive electrode active material in the positive electrode is preferably 5 mg or more, and more preferably 10 mg or more per 1 cm$^2$ of the porous carbon sheet in order to maintain the capacity at a certain level or higher. On the other hand, the amount of the positive electrode active material in the positive electrode is preferably 100 mg or less, and more preferably 50 mg or less per 1 cm$^2$ of the porous carbon sheet in order to improve the reactivity of the positive electrode active material. When the positive electrode active material is used with the conductive assistant and the binder, the content of each component in the positive electrode mixture is preferably as follows: 80 to 98% by mass of the positive electrode active material; 1.5 to 10% by mass of the conductive assistant; and 0.5 to 10% by mass of the binder.

The positive electrode can have a positive electrode terminal that is connected to an external device. The positive electrode terminal is preferably provided as a part of the porous carbon sheet constituting a positive electrode current collector, although it is also possible to attach a terminal portion made of another material to a part of the porous carbon sheet constituting the positive electrode current collector. In the former case, the porous carbon sheet can be cut into a shape having a main body portion for holding the positive electrode active material layer and a terminal portion for forming the positive electrode terminal. Thus, the positive electrode can be produced by holding, e.g., the positive electrode active material layer only in the main body portion. This configuration of the positive electrode terminal can increase the productivity of the positive electrode, resulting in an increase in the productivity of the cell.

<Negative electrode>

When the cell is an alkaline cell (primary cell or secondary cell) or a manganese cell, the negative electrode can be made of, e.g., a zinc-based material (which collectively refers to both a zinc material and a zinc alloy material).

Specifically, the negative electrode containing the zinc-based material may be a negative electrode that contains zinc-based particles (which collectively refer to both zinc particles and zinc alloy particles).

The alloy constituents of the zinc alloy particles may be, e.g., indium (the content is, e.g., 0.005 to 0.05% by mass), bismuth (the content is, e.g., 0.005 to 0.25% by mass, preferably 0.01% by mass or more, and preferably 0.05% by mass or less), and aluminum (the content is, e.g., 0.001 to 0.15% by mass).

In view of a reduction in the environmental impact of the cell for disposal, it is preferable that the zinc-based material used for the negative electrode contains the smallest possible amount of mercury, cadmium, lead, and chromium. Specifically, it is more preferable that the mercury content is 0.1% by mass or less, the cadmium content is 0.01% by mass or less, the lead content is 0.1% by mass or less, and the chromium content is 0.1% by mass or less.

The particle size of the zinc-based particles can be defined as follows. For example, the proportion of the particles with a particle diameter of 75 pm or less in all particles is preferably 50% by mass or less, and more preferably 30% by mass or less. Moreover, the proportion of the particles with a particle diameter of 100 to 200 pm in all particles may be 50% by mass or more, and more preferably 90% by mass or more.

When the negative electrode contains the zinc-based particles, e.g., a gelling agent (such as sodium polyacrylate or carboxymethyl cellulose) and a binder can be added as needed. This can be mixed with an electrolyte solution to form a negative electrode agent (such as a gel-like negative electrode). The amount of the gelling agent in the negative electrode is preferably, e.g., 0.5 to 1.5% by mass. The amount of the binder in the negative electrode is preferably 0.5 to 3% by mass.

The electrolyte solution used for the negative electrode containing the zinc-based particles may be the same as that injected into the cell.

The content of the zinc-based particles in the negative electrode is preferably, e.g., 60% by mass or more, and more preferably 65% by mass or more. The content of the zinc-based particles in the negative electrode is also preferably 95% by mass or less, and more preferably 90% by mass or less.

The negative electrode containing the zinc-based particles preferably contains an indium compound. The indium compound in the negative electrode can more effectively prevent the generation of hydrogen gas due to a corrosion reaction between the zinc-based particles and the electrolyte solution.

Examples of the indium compound include indium oxide and indium hydroxide.

The amount of the indium compound in the negative electrode is preferably 0.003 to 1 with respect to 100 of the zinc-based particles at a mass ratio.

The negative electrode can also be made of a zinc-based sheet (zinc foil, zinc alloy foil, etc.) having the same composition as the zinc-based particles. In this case, the thickness of the negative electrode is preferably 10 pm or more, and more preferably 20 pm or more. The thickness of the negative electrode is also preferably 1000 pm or less, more preferably 500 pm or less, and particularly preferably 100 pm or less in terms of flexibility.

The use of the zinc-based sheet can reduce the resistance value of the negative electrode, which in turn can reduce the internal resistance of the cell and improve the load characteristics further.

The zinc alloy foil containing 0.01 to 0.25% by mass of Bi is preferably used as the negative electrode in order to significantly reduce the generation of gas due to the corrosion of the negative electrode during the storage of the cell and to further improve the storage characteristics of the cell.

The proportion of Bi in the zinc alloy foil is preferably 0.01% by mass or more, and more preferably 0.02% by mass or more in terms of satisfactorily ensuring the effect of reducing the generation of gas by the presence of Bi. However, the higher the Bi content, the greater the reaction resistance during discharge of the negative electrode and the lower the operating voltage of the cell. As a result, the effect of reducing the generation of gas may be degraded. Therefore, the proportion of Bi in the zinc alloy foil is preferably 0.25% by mass or less, and more preferably 0.1% by mass or less.

Moreover, In has an effect of increasing the hardness of the zinc alloy foil. If the In content is too large, the resulting foil becomes hard and brittle. This can reduce the productivity of the negative electrode and impair the flexibility of the sheet-shaped cell. Therefore, the zinc alloy foil should not contain In. When the zinc alloy foil contains In, the proportion of In is preferably 0.04% by mass or less, and more preferably 0.02% by mass or less.

The zinc alloy foil may be an electrolytic zinc foil because it is easy to adjust the grain size in a suitable range (0.2 pm or more and 8 pm or less), and it is also easy to distribute the additional elements uniformly. The use of the electrolytic zinc foil can further reduce the generation of gas due to the corrosion of zinc in the cell, as compared to the use of a rolled zinc foil.

The negative electrode containing the zinc-based material can include a current collector as needed. The current collector of the negative electrode containing the zinc-based material may be, e.g., a mesh, foil, expanded metal, or punched metal made of metals such as nickel, copper, and stainless steel, a sheet or mesh made of carbon, or a coating of carbon paste. The thickness of the current collector of the negative electrode is preferably 5 pm or more, and more preferably 10 pm or more. The thickness of the current collector is also preferably 300 pm or less.

When the cell is a nonaqueous electrolyte cell (primary cell or secondary cell), the negative electrode can have a structure in which a negative electrode mixture layer containing, e.g., a negative electrode active material and a binder is formed on one side or both sides of a current collector. Alternatively, the negative electrode may be a metal foil that is to be a negative electrode active material. Further, the negative electrode can have a laminated structure of a metal foil that is to be a negative electrode active material, and a current collector.

When the cell is a nonaqueous electrolyte primary cell, examples of the negative electrode active material include metallic lithium and a lithium alloy (lithium-aluminum alloy).

When the cell is a nonaqueous electrolyte secondary cell, examples of the negative electrode active material include the following: metallic lithium; a lithium alloy (lithium-aluminum alloy); carbon materials such as graphite, pyrolytic carbon, coke, glassy carbon, a calcined organic polymer compound, mesophase carbon microbeads, carbon fibers, and activated carbon; alloys containing elements that can be alloyed with lithium such as Si and Sn; and oxides of Si or Sn.

The negative electrode having the negative electrode mixture layer can include any of the various binders that are described above for the positive electrode active material layer. Moreover, the negative electrode mixture layer can contain a conductive assistant. In this case, the same conductive assistants as those for the positive electrode active material layer can be used.

The negative electrode having the negative electrode mixture layer and the current collector can be produced in the following manner. For example, the negative electrode active material and the binder, and optionally the conductive assistant, are dispersed in water or an organic solvent such as NMP to prepare a negative electrode mixture containing composition, e.g., in the form of slurry or paste (in this case, the binder can be dissolved in the solvent). This composition is applied to the current collector, dried, and optionally subjected to pressing such as calendering.

In the composition of the negative electrode mixture layer, e.g., the content of the negative electrode active material is preferably 70 to 99% by mass, and the content of the binder is preferably 1 to 30% by mass. When the conductive assistant is used, the content of the conductive assistant in the negative electrode mixture layer is preferably 1 to 20% by mass. The thickness of the negative electrode mixture layer is preferably 1 to 100 pm per one side of the current collector.

The current collector of the negative electrode having the negative electrode mixture layer may be, e.g., a foil, punched metal, expanded metal, or a mesh made of copper, stainless steel, nickel, titanium, or alloys thereof or may be, e.g., a sheet or mesh made of carbon. Usually, a copper foil with a thickness of 5 pm or more and 30 pm or less is preferably used.

The negative electrode made of the zinc-based material and used for an alkaline cell or a manganese cell, and the negative electrode used for a nonaqueous electrolyte cell can include a negative electrode current collector. In such a case, when these cells include a sheet-type exterior case (i.e., an exterior case made of a resin film), the negative electrode current collector can be provided by applying a carbon paste to the surface of the resin film that is to be the inner surface of the sheet-type exterior case. Alternatively, the negative electrode current collector can be a metal layer of the sheet-type exterior case. The thickness of the carbon paste layer is preferably 50 to 200 pm.

The negative electrode can have a negative electrode terminal as needed. The negative electrode terminal can be formed by connecting, e.g., the metal foil (plate) or wire, which would constitute the negative electrode current collector, either directly or through a lead to the current collector of the negative electrode. The negative electrode terminal in the form of a foil (plate) preferably has a thickness of 20 pm or more and 500 pm or less. The negative electrode terminal in the form of a wire preferably has a diameter of 50 pm or more and 1500 pm or less.

When the negative electrode is made of the zinc-based sheet, a part of this sheet can be used as a lead of the negative electrode and connected to the negative electrode terminal, or can also be used as the negative electrode terminal.

<Separator>

The separator is interposed between the positive electrode and the negative electrode and is preferably made of a nonwoven fabric. Examples of the nonwoven fabric of the separator include the following: a nonwoven fabric mainly composed of vinylon and rayon, a vinylon-rayon nonwoven fabric (vinylon-rayon mixed paper), a polyamide nonwoven fabric, a polyolefin-rayon nonwoven fabric, and a polyolefin nonwoven fabric (e.g., polyethylene, polypropylene, an ethylene-propylene copolymer, or polymethylpentene). Further examples of the separator include the following: vinylon paper, vinylon-linter pulp paper, vinylon-mercerized pulp paper, a cellophane graft film, and a microporous polyolefin film (e.g., microporous polyethylene film or microporous polypropylene film). The surface of the separator can be made hydrophilic to improve the wettability with the electrolyte (electrolyte solution).

The separator preferably has a thickness of, e.g., 10 to 500 pm. The thickness of the separator is preferably 10 to 50 pm for a microporous film and is preferably 20 to 500 pm, and more preferably 50 to 500 pm for a nonwoven fabric.

The porosity of the porous separator is preferably 40 to 90% by volume.

In this specification, the porosity P (%) of the separator can be calculated using the following formula (1) to determine the sum of the components i based on the thickness of the separator, the mass per area of the separator, and the density of the components of the separator.

$$P = \{1 - (m/t) / (\Sigma a_i \cdot \rho_i)\} \times 100 \quad (1)$$

In the formula (1), $a_i$ represents the ratio of the component i when the total mass is taken as 1, $\rho_i$ represents the density (g/cm³) of the component i, m represents the mass per unit area (g/cm²) of the separator, and t represents the thickness (cm) of the separator. The mass m per unit area of the separator is determined by measuring the mass of a 20 cm square separator with an electronic balance and calculating the mass per 1 cm². The thickness t of the separator is determined by measuring the thickness at 10 random points with a micrometer and taking the average of the measured thicknesses.

<Electrolyte>

When the cell is an alkaline cell or a manganese cell, the electrolyte of the cell may be an aqueous solution in which an electrolyte salt is dissolved.

When the cell is an alkaline cell, the electrolyte of the cell may be an alkaline electrolyte solution. The alkaline electrolyte solution may be, e.g., an alkaline aqueous solution composed of an aqueous solution of alkali metal hydroxide such as potassium hydroxide, sodium hydroxide, or lithium hydroxide. The alkaline electrolyte solution can also be obtained by adding a zinc oxide to the alkaline aqueous solution. The concentration of the alkali metal hydroxide in the alkaline electrolyte solution is preferably 28 to 38% by mass in the case of, e.g., potassium hydroxide. When the alkaline electrolyte solution contains a zinc oxide, the concentration of the zinc oxide is preferably 1.0 to 4.0% by mass.

When the cell is a manganese cell, the electrolyte of the cell may be an aqueous solution with a pH of 3 or more and 12 or less. To prevent the corrosion of the negative electrode active material, the pH of the aqueous solution is preferably 4 or more, and more preferably 5 or more. Examples of the electrolyte salt include the following: chlorides such as sodium chloride, potassium chloride, magnesium chloride, calcium chloride, ammonium chloride, and zinc chloride; hydroxides of alkali metals or alkaline-earth metals (e.g., sodium hydroxide, potassium hydroxide, and magnesium hydroxide), acetates of these metals (e.g., sodium acetate, potassium acetate, and magnesium acetate), nitrates of these metals (e.g., sodium nitrate, potassium nitrate, and magnesium nitrate), sulfates of these metals (e.g., sodium sulfate, potassium sulfate, and magnesium sulfate), phosphates of these metals (e.g., sodium phosphate, potassium phosphate, and magnesium phosphate), borates of these metals (e.g., sodium borate, potassium borate, and magnesium borate), citrates of these metals (e.g., sodium citrate, potassium citrate, and magnesium citrate), and glutamates of these metals (e.g., sodium glutamate, potassium glutamate, and magnesium glutamate); hydrogencarbonates of alkali metals (e.g., sodium hydrogencarbonate and potassium hydrogencarbonate); percarbonates of alkali metals (e.g., sodium percarbonate and potassium percarbonate); compounds containing halogens such as fluorides; and polycarboxylic acids. The electrolyte can contain either one or two or more of these electrolyte salts. Among them, an aqueous solution of zinc chloride is preferably used as the electrolyte. The concentration of the zinc chloride is preferably 10 to 40% by mass.

The use of the zinc-based sheet as the negative electrode may cause problems such that the negative electrode will be broken due to corrosion by the electrolyte solution composed of an aqueous solution, and the capacity of the negative electrode cannot be fully drawn. However, these problems can be reduced when the aqueous electrolyte solution is mixed with a thickening agent, and more preferably to form a gel (i.e., gel electrolyte). The thickening agent that can be contained in the electrolyte may be any of various synthetic polymers or natural polymers. Specific examples of the thickening agent include the following: cellulose derivatives such as carboxymethyl cellulose (CMC) and carboxyethyl cellulose (CEC); polyalkylene glycol (having a molecular weight of preferably 1000 or more, and more preferably 10000 or more) such as polyethylene glycol (PEG); polyvinylpyrrolidone; polyvinyl acetate; starch; guar gum; xanthan gum; sodium alginate; hyaluronic acid; gelatin; and polyacrylic acid. Moreover, in the above examples of the thickening agents, when the functional group including a carboxyl group or its salt (-COOH, -COONa, etc.) is present in the molecule, it is also preferable that a polyvalent metal salt serving as a gelation accelerator is added to the electrolyte. The amount of the thickening agent in the electrolyte is preferably 0.1 to 5% by mass. When the gelation accelerator is used, the content of the gelation accelerator is preferably 1 to 30 with respect to 100 of the thickening agent at a mass ratio.

When the cell is a nonaqueous electrolyte cell, the electrolyte of the cell may be a solution obtained by dissolving a lithium salt in a nonaqueous solvent (i.e., a nonaqueous electrolyte solution). Examples of the lithium salt include inorganic lithium salts such as $LiClO_4$, $LiPF_6$, $LiBF_4$, $LiAsF_6$, and $LiSbF_6$, and organic lithium salts such as $LiCF_sSO_s$, $LiCF_3CO_2$, $Li_2C_2F_4(SO_3)_2$, $LiN(CF_3SO_2)_2$, $LiC(CF_3SO_2)_3$, $LiC_nF_{2n+1}SO_3$ ($n \geq 2$), and $LiN(RfOSO_2)_2$ (where Rf represents a fluoroalkyl group).

Examples of the nonaqueous solvent used for the nonaqueous electrolyte solution include the following: cyclic carbonates such as ethylene carbonate, propylene carbonate, butylene carbonate, and vinylene carbonate; chain carbonates such as dimethyl carbonate, diethyl carbonate, and methyl ethyl carbonate; chain esters such as methyl propionate; cyclic esters such as y-butyrolactone; chain ethers such as dimethoxyethane, diethyl ether, 1,3-dioxolane, diglyme, triglyme, and tetraglyme; cyclic ethers such as dioxane, tetrahydrofuran, and 2-methyltetrahydrofuran; nitriles such as acetonitrile, propionitrile, and methoxypropionitrile; and sulfurous esters such as ethylene glycol sulfite. These nonaqueous solvents can be used alone or in combination of two or more. For better characteristics of the cell, a combination of the solvents capable of achieving a high conductivity, e.g., a mixed solvent of the ethylene carbonate and the chain carbonate is preferred. Moreover, additives such as vinylene carbonates, 1,3-propane sultone, diphenyl disulfide, cyclohexylbenzene, biphenyl, fluorobenzene, and t-butylbenzene can be appropriately added to the nonaqueous electrolyte solution in order to improve the properties such as safety, charge-discharge cycle characteristics, and high-temperature storage characteristics.

The concentration of the lithium salt in the nonaqueous electrolyte solution is preferably 0.5 to 1.5 mol/l, and more preferably 0.9 to 1.25 mol/l.

The electrolyte solution composed of an aqueous solution and the nonaqueous electrolyte solution can be mixed with a gelling agent such as a known polymer to form a gel (i.e., gel electrolyte).


<Cell form or the like>


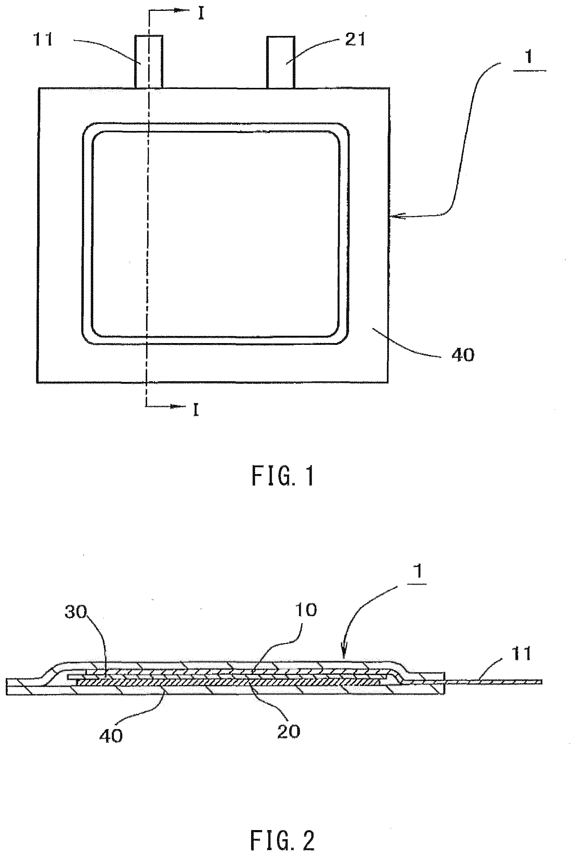

FIGS. 1 and 2 schematically illustrate an example of a cell of the present invention. FIG. 1 is a plan view of the cell and FIG. 2 is a cross-sectional view taken along the line I-I in FIG. 1.

A cell 1 illustrated in FIGS. 1 and 2 is an example of a sheet-type cell. The cell 1 includes a laminated film exterior case 40 made of two metal laminated films, an electrode body in which a positive electrode 10 and a negative electrode 20 are stacked via a separator 30, and an electrolyte (not shown). The electrode body and the electrolyte are contained in the laminated film exterior case 40. The laminated film exterior case 40 is sealed by heat-sealing the outer edges of the upper and lower metal laminated films.

For the purpose of brevity, the individual layers of the laminated film exterior case 40 and the layers of the positive electrode 10 and the negative electrode 20 are not distinguished from each other in FIG. 2.

The positive electrode 10 is connected to a positive electrode terminal 11 in the cell 1. Although not shown in FIG. 2, the negative electrode 20 is also connected to a negative electrode terminal 21 in the cell 1. One end of the positive electrode terminal 11 and one end of the negative electrode terminal 21 are drawn to the outside of the laminated film exterior case 40 so that they can be connected to, e.g., an external device.

The form of the cell of the present invention is not particularly limited. The cell may be in various forms such as a sheet cell (laminate type), a flat cell (including coin type and button type), and a tubular cell (such as a cylindrical cell or a rectangular (prismatic) cell). The exterior case (cell case) for housing the negative electrode, the positive electrode, the separator, and the electrolyte can be made of a resin film or a combination of a metal can (exterior can) having an opening and a cover (sealing can).

Examples of the resin film of the exterior case include a nylon film (such as a nylon 66 film) and a polyester film (such as a polyethylene terephthalate (PET) film).

The sheet-type exterior case made of the resin film can have a laminated structure of a layer of the resin and a heat-sealing resin layer to facilitate the sealing process using heat seal. The heat-sealing resin of the heat-sealing resin layer may be, e.g., a modified polyolefin film (such as a modified polyolefin ionomer film) or polypropylene and its copolymer. The thickness of the heat-sealing resin layer is preferably 20 to 200 pm.

A metal layer can be formed on the resin film. The metal layer may be, e.g., an aluminum film (including aluminum foil and aluminum alloy foil) or a stainless steel film (including stainless steel foil). The thickness of the metal layer is preferably 10 to 150 pm.

The resin film of the sheet-type exterior case preferably has an electrically insulating moisture barrier layer. In this case, the resin film may have either a single layer structure or a multilayer structure. The single layer structure includes an electrically insulating resin film that also serves as a moisture barrier layer. The multilayer structure includes a plurality of electrically insulating resin films, at least one of which serves as a moisture barrier layer. Alternatively, the multilayer structure can include a base material layer made of a resin film and an electrically insulating moisture barrier layer formed on the surface of the base material layer.

The preferred resin film can have a structure in which the moisture barrier layer composed of at least an inorganic oxide is formed on the surface of the base material layer made of the resin film.

Examples of the inorganic oxide of the moisture barrier layer include aluminum oxide and silicon oxide. The moisture barrier layer composed of a silicon oxide tends to be superior to that composed of an aluminum oxide in the function of reducing the permeation of water contained in the electrolyte solution of the cell. For this reason, the inorganic oxide of the moisture barrier layer is more preferably a silicon oxide.

The moisture barrier layer composed of the inorganic oxide can be formed on the surface of the base material layer by, e.g., an evaporation method. The thickness of the moisture barrier layer is preferably 10 to 300 nm.

The base material layer made of the resin film, which has the moisture barrier layer, may be, e.g., a polyolefin film, a polyimide film, or a polycarbonate film, in addition to the nylon film and the polyester film as described above. The thickness of the base material layer is preferably 5 to 100 pm.

When the resin film includes the moisture barrier layer and the base material layer, a protective layer for protecting the moisture barrier layer can be formed on the surface of the moisture barrier layer (which is opposite to the base material layer).

The heat-sealing resin layer can be further formed on the resin film that includes the moisture barrier layer and the base material layer.

The total thickness of the sheet-type exterior case is preferably 10 pm or more in terms of, e.g., imparting sufficient strength to the sheet-type cell and 200 pm or less in terms of suppressing an increase in the thickness of the sheet-type cell and a decrease in the energy density of the sheet-type cell.

Two sheet-type exterior case members are arranged in layers, or one sheet-type exterior case member is folded, such that the overlapping edges are bonded together to seal the sheet-type exterior case, thus providing a sheet-type (laminate type) cell. Alternatively, the exterior can and the sealing can are joined by caulking via a gasket or are welded to seal the joint between them, thus providing a flat cell or a tubular cell.

When the exterior case is sealed by caulking, the gasket arranged between the exterior can and the sealing can is made of, e.g., polypropylene (PP) or nylon. Moreover, when particularly high heat resistance is required in relation to the intended use of the cell, the gasket can be made of a heat-resistant resin with a melting point or a thermal decomposition temperature of 200°C or more. Examples of the heat-resistant resin include a fluorocarbon polymer such as a tetrafluoroethylene-perfluoroalkoxyethylene copolymer (PFA), polyphenylene ether (PEE), polysulfone (PSF), polyarylate (PAR), polyether sulfone (PES), PPS, and PEEK. Further, when the intended use of the cell requires heat resistance, the exterior case can be sealed by a glass hermetic seal.

Examples

Hereinafter, the present invention will be described in detail by way of examples. However, the present invention is not limited to the following examples.

Example 1

<Positive electrode>

A composition (B) for forming a positive electrode active material layer was prepared by mixing 87.5 parts by mass of electrolytic manganese dioxide ("SP-A" manufactured by Tosoh Corporation, average particle size: 0.5 $\mu$m), 10 parts by mass of graphite ("SP-20" manufactured by Nippon Graphite Industries, Co., Ltd., average particle size: 30 pm), 2.5 parts by mass of ammonium polyacrylate, and 150 parts by mass of water.

The composition (B) was then applied to a piece of porous carbon paper (thickness: 0.15 mm, porosity: 75%, air permeability (Gurley): 70 sec/100 ml) by stripe coating so that the coating amount would be 18 mg/cm$^2$ after drying. Subsequently, the composition (B) was dried, resulting in a piece of carbon paper having a region where the surface of the carbon paper was covered with a positive electrode active material layer (referred to as a "region A" in the following) and a region where only the carbon paper was present without the positive electrode active material layer (referred to as a "region B" in the following). This piece of carbon paper was punched into a shape including a main body portion of 30 mm × 30 mm, which was located in the region A containing the positive electrode active material, and a positive electrode terminal of 10 mm × 20 mm, which was located in the region B. Thus, a positive electrode with a theoretical capacity of 30 mAh was produced.

The density of the positive electrode was 471 mg/cm$^3$, and the surface roughness of the surface of the positive electrode that was covered with the positive electrode active material layer was 2.1 pm. The composition (B) penetrated into only the surface layer of the carbon paper in the thickness direction. Most of the positive electrode active material layer was formed on the carbon paper, and a part of the positive electrode active material layer was formed in the pores of the carbon paper.

<Negative electrode>

An electrolytic zinc foil (thickness: 0.03 mm) was prepared. The electrolytic zinc foil was composed of a zinc alloy that contained 0.05% by mass of Bi as an additional element, but did not contain In. The electrolytic zinc foil was punched into a shape including a main body portion of 30 mm × 30 mm and a negative electrode terminal of 10 mm × 20 mm. Thus, a negative electrode was produced.

<Electrolyte solution>

An electrolyte solution was an aqueous solution (pH: 5.1) in which zinc chloride (concentration: 20% by mass) and ammonium chloride (concentration: 5% by mass) were dissolved.

<Separator>

A separator was a PP nonwoven fabric film (thickness: 50 pm, basis weight: 12 g/m$^2$).

<Sheet-type exterior case member>

Two 50 mm $\times$ 50 mm aluminum laminated films (each having a thickness of 65 pm) were used as sheet-type exterior case members. Each of the aluminum laminated films included an aluminum foil, a polyethylene terephthalate film on the outer surface of the aluminum foil, and a PP film (heat-sealing resin layer) on the inner surface of the aluminum foil.

<Cell assembly>

The positive electrode, the separator, and the negative electrode were formed in this order on one of the aluminum laminated films, and then the other aluminum laminated film was placed on top of them. Next, three sides of the two aluminum laminated films were thermally fused to each other, thus providing a bag-like exterior case. After 0.1 ml of the electrolyte solution was injected through the opening of the bag-like exterior case, the opening was sealed by thermal fusion, and thus a sheet-type cell was produced.

Example 2

A composition (A) for forming a positive electrode active material layer was prepared by mixing 87.5 parts by mass of electrolytic manganese dioxide ("SP-A" manufactured by Tosoh Corporation, average particle size: 0.5 pm), 10 parts by mass of graphite ("SP-20" manufactured by Nippon Graphite Industries, Co., Ltd., average particle size: 30 pm), 2.5 parts by mass of ammonium polyacrylate, 1 part by mass of a fluorine-based surfactant ("SURFLON S-242 (trade name)" manufactured by AGC Seimi Chemical Co., Ltd.), and 150 parts by mass of water.

A positive electrode with a theoretical capacity of 30 mAh was produced in the same manner as Example 1 except the following conditions. The composition (A) was applied to the same piece of porous carbon paper as used in Example 1 by stripe coating so that the coating amount would be 6.7 mg/cm$^2$ after drying. Subsequently, the composition (A) was dried, and a positive electrode active material layer was formed in the pores of the porous carbon paper. Further, the same composition (B) as prepared in Example 1 was applied to the surface of the porous carbon paper, on which the composition (A) had been applied, by stripe coating so that the coating amount would be 8.3 mg/cm$^2$ after drying. Subsequently, the composition (B) was dried, and a layer derived from the composition (B) was formed to cover the surface of the porous carbon paper.

The density of the positive electrode was 534 mg/cm$^3$, and the surface roughness of the surface of the positive electrode that was covered with the positive electrode active material layer was 2.1 $\mu$m. The composition (A) penetrated into all the pores of the porous carbon paper and formed the positive electrode active material layer.

Then, a sheet-type cell was produced in the same manner as Example 1 except that the positive electrode thus obtained was used.

Example 3

A positive electrode with a theoretical capacity of 30 mAh was produced in the same manner as Example 2 except that the electrolytic manganese dioxide used for the composition (A) and the composition (B) was changed to electrolytic manganese dioxide with an average particle size of 8 pm.

The density of the positive electrode was 643 mg/cm$^3$, and the surface roughness of the surface of the positive electrode that was covered with the positive electrode active material layer was 2.1 pm. The composition (A) penetrated into all the pores of the porous carbon paper and formed the positive electrode active material layer.

Then, a sheet-type cell was produced in the same manner as Example 1 except that the positive electrode thus obtained was used.

Example 4

A positive electrode with a theoretical capacity of 30 mAh was produced in the same manner as Example 2 except that the electrolytic manganese dioxide used for the composition (A) and the composition (B) was changed to electrolytic manganese dioxide with an average particle size of 43 pm.

The density of the positive electrode was 446 mg/cm$^3$, and the surface roughness of the surface of the positive electrode that was covered with the positive electrode active material layer was 6 pm. The composition (A) penetrated into all the pores of the porous carbon paper and formed the positive electrode active material layer.

Then, a sheet-type cell was produced in the same manner as Example 1 except that the positive electrode thus obtained was used.

Comparative Example 1

<Positive electrode>

The same aluminum laminated film (size: 50 mm × 50 mm) as used for the formation of the sheet-type exterior case member in Example 1 was prepared. A carbon conductive paste was printed on the surface of the PP film of the aluminum laminated film by screen printing so that the thickness would be 0.05 mm after drying, thus forming a current collecting layer. The current collecting layer had a shape including a main body portion of 30 mm × 30 mm, on which a positive electrode mixture layer was to be formed, and a positive electrode terminal of 10 mm × 10 mm.

Then, the same composition (B) as used in Example 1 was printed on the surface of the main body portion of the current collecting layer by screen printing so that the thickness would be 0.150 mm after drying, resulting in a positive electrode active material layer. Thus, a positive electrode with a theoretical capacity of 30 mAh was produced.

The aluminum laminated film had a notch of 10 mm × 5 mm in advance, which allowed a part of the opposing negative electrode terminal to be exposed.

<Negative electrode>

Zinc alloy particles (average particle size: 30 pm) containing additional elements: 500 ppm of In, 400 ppm of Bi, and 10 ppm of Al (where the contents of the additional elements were expressed in terms of mass) were used. A negative electrode mixture containing composition was prepared by mixing 70 parts by mass of the zinc alloy particles, 20 parts by mass of graphite ("SP-20" manufactured by Nippon Graphite Industries, Co., Ltd., average particle size: 30 pm), which was the same as used for the positive electrode, 10 parts by mass of ammonium polyacrylate, and 150 parts by mass of water.

The same aluminum laminated film (size: 50 mm × 50 mm) as used for the formation of the sheet-type exterior case member in Example 1 was prepared. A carbon conductive paste was printed on the surface of the PP film of the aluminum laminated film by screen printing so that the thickness would be 0.05 mm after drying, thus forming a current collecting layer. The current collecting layer had a shape including a main body portion of 30 mm × 30 mm, on which a layer containing the negative electrode active material was to be formed, and a negative electrode terminal of 10 mm × 10 mm.

Then, the negative electrode mixture containing composition was printed on the surface of the main body portion of the current collecting layer by screen printing so that the thickness would be 0.125 mm after drying, resulting in a negative electrode mixture layer. Thus, a negative electrode was produced.

The aluminum laminated film had a notch of 10 mm × 5 mm in advance, which allowed a part of the opposing positive electrode terminal to be exposed.

<Cell assembly>

The same separator as used in Example 1 was placed on the aluminum laminated film having the current collecting layer and the positive electrode active material layer with the separator facing the positive electrode active material layer. Further, the aluminum laminated film having the current collecting layer and the negative electrode mixture layer was placed on the top of the separator with the negative electrode mixture layer facing the separator. The positions of these members were adjusted so that the end of the negative electrode terminal was exposed from the notch of the aluminum laminated film of the positive electrode, and the end of the positive electrode terminal was exposed from the notch of the aluminum laminated film of the negative electrode. Next, three sides of the two aluminum laminated films were thermally fused to each other, thus providing a bag-like exterior case. After 0.3 ml of the electrolyte solution, which was the same as used in Example 1, was injected through the opening of the bag-like exterior case, the opening was sealed by thermal fusion, and thus a sheet-type cell was produced.

Example 5

A sheet-type cell was produced in the same manner as Example 1 except that the separator was changed to a laminated film of a cellophane film with a thickness of 20 pm and a graft film with a thickness of 30 pm ("YG2152" manufactured by Yuasa Membrane Systems Co., Ltd.). The graft film was composed of a graft copolymer obtained by graft copolymerization of acrylic acid with a polyethylene main chain.

Example 6

A positive electrode was produced in the same manner as Example 2 except that the positive electrode active material layer derived from the composition (A) was formed in the pores of the porous carbon paper, and the surface of the porous carbon paper was not covered with the positive electrode active material layer derived from the composition (B).

The density of the positive electrode was 232 mg/cm$^3$, and the surface roughness of the surface of the positive electrode that was covered with the positive electrode active material layer was 11.4 pm. The fibers of the carbon paper were exposed on the surface.

Then, a sheet-type cell was produced in the same manner as Example 1 except that the positive electrode thus obtained was used.

The sheet-type cells in the Examples and the Comparative Example were evaluated as follows.

(Rate of occurrence of short circuit)

Using 10 sheet-type cells for each of the Examples and the Comparative Example, the open circuit voltage was measured 24 hours after the assembly, and the presence or absence of a short circuit was determined based on the measured value. Thus, the rate of occurrence of a short circuit was obtained.

(Measurement of internal resistance)

The internal resistance of each of the sheet-type cells in the Examples and the Comparative Example was measured by applying an AC voltage of 1 kHz to the cell in a room temperature environment. The evaluation showed that the lower the internal resistance, the smaller the voltage drop during discharge, and therefore the better the load characteristics of the cell.

(Measurement of discharge utilization rate)

Each of 10 sheet-type cells was discharged at a current corresponding to 1/500C (mA), where C (mAh) represents a design capacity of the positive electrode, and the discharge capacity was measured until the cell voltage was reduced to 2 V. Then, the average of the discharge capacities of the 10 cells was calculated. Moreover, the ratio of the discharge capacity (average) to the design capacity C of the positive electrode was determined as a discharge utilization rate.

Table 1 shows the configurations of the positive electrode and the separator of each of the sheet-type cells in the Examples and the Comparative Example. Table 2 shows the results of the above evaluations.

[TABLE 1]

| | Positive electrode | | | | Covering of current collector surface | Separator |
|---|---|---|---|---|---|---|
| | Average particle size of positive electrode active material ($\mu$m) | Current collector | Surface roughness ($\mu$m) | | | |
| | | | Ra | Rz | | |
| Ex. 1 | 0.5 | carbon paper | 2.1 | 15.4 | ○ | nonwoven fabric |
| Ex. 2 | 0.5 | carbon paper | 2.1 | 15.4 | ○ | nonwoven fabric |
| Ex. 3 | 8 | carbon paper | 2.1 | 15.2 | ○ | nonwoven fabric |
| Ex. 4 | 43 | carbon paper | 6 | 32.8 | ○ | nonwoven fabric |
| Ex. 5 | 0.5 | carbon paper | 2.1 | 15.4 | ○ | cellophane film/graft film |

(continued)

| | Positive electrode | | | | Covering of current collector surface | Separator |
| --- | --- | --- | --- | --- | --- | --- |
| | Average particle size of positive electrode active material ($\mu$m) | Current collector | Surface roughness ($\mu$m) | | | |
| | | | Ra | Rz | | |
| Ex. 6 | 0.5 | carbon paper | 11.4 | 77.8 | $\times$ | nonwoven fabric |
| Comp. Ex. 1 | 0.5 | carbon coating | 2.8 | 17.7 | $\bigcirc$ | nonwoven fabric |

In Table 1, the marks "$\bigcirc$" and "$\times$" in the column labeled "Covering of current collector surface" represent whether or not the surface of the positive electrode current collector is covered with the positive electrode active material layer. The "cellophane film/graft film" in the column labeled "Separator" represents a laminated film of a cellophane film and a graft film.

[TABLE 2]

| | Rate of occurrence of short circuit (%) | Internal resistance ($\Omega$) | Discharge utilization rate (%) |
| --- | --- | --- | --- |
| Ex. 1 | 0 | 7 | 85 |
| Ex. 2 | 0 | 2 | 90 |
| Ex. 3 | 0 | 2 | 90 |
| Ex. 4 | 0 | 2 | 55 |
| Ex. 5 | 0 | 100 | 30 |
| Ex. 6 | 100 | - | - |
| Comp. Ex. 1 | 0 | 1000 | 8 |

In Table 2, the mark "-" in the columns labeled "Internal resistance" and "Discharge utilization rate" means that all the cells developed a short circuit and could not be measured.

As shown in Tables 1 and 2, the sheet-type cells in Examples 1 to 5 have a low internal resistance and excellent load characteristics. Each of the sheet-type cells in Examples 1 to 5 includes the positive electrode having appropriate surface roughness because the surface of the porous carbon paper is covered with the positive electrode active material layer. Moreover, the sheet-type cells in Examples 1 to 5 do not cause a short circuit and also have a high discharge utilization rate. In particular, the sheet-type cells in Examples 1 to 4, each including the separator made of a nonwoven fabric, are superior to the sheet-type cell in Example 5, including the separator made of a laminated film of a cellophane film and a graft film, in reducing the internal resistance, improving the load characteristics, and increasing the discharge utilization rate. Further, the positive electrode of each of the sheet-type cells in Examples 1 to 3 uses the positive electrode active material with a more suitable average particle size and thus can have smaller surface roughness. Therefore, the sheet-type cells in Examples 1 to 3 have a higher discharge utilization rate than the sheet-type cell in Example 4, which includes the positive electrode that uses the positive electrode active material with a large average particle size and thus has relatively large surface roughness.

In each of the sheet-type cells in Examples 2 to 4, all the pores of the porous carbon paper are filled with the positive electrode active material by using the composition (A) that has high penetrability through the porous carbon paper. Therefore, the sheet-type cells in Examples 2 to 4 can achieve a better function of the porous carbon paper as a current collector and have a lower internal resistance than the sheet-type cell in Example 1, in which only some of the pores of the porous carbon paper are filled with the positive electrode active material.

On the other hand, the sheet-type cell in Comparative Example 1 includes the positive electrode using the carbon conductive paste as a current collecting layer instead of the porous carbon paper, and results in a high internal resistance, poor load characteristics, and a low discharge utilization rate.

The sheet-type cell in Example 6 includes the positive electrode having large surface roughness because the surface of the porous carbon paper is not covered with the positive electrode active material layer. Thus, the end portion of a carbon material of the porous carbon sheet passes through the separator made of a nonwoven fabric, leading to a short circuit in all the cells produced. This problem can be prevented, e.g., by using the laminated film of the cellophane film and the graft film, which is the separator in Example 5, or by increasing the thickness of the separator. For example, if the sheet-type cell in Example 6 includes the same separator as that in Example 5, it can have an internal resistance of about 100 Ω and a discharge utilization rate comparable to that in Example 5.

(Evaluation of zinc foil)

Electrolytic zinc foils, each having a thickness of 50 μm and the composition shown in Table 3, and rolled zinc foils, each having a thickness of 50 μm and the composition shown in Table 4, were prepared. Using these electrolytic zinc foils and rolled zinc foils, a flexibility evaluation test and a gas generation measurement test were performed. The electrolytic zinc foils and the rolled zinc foils contained inevitable impurities other than Zn and the elements shown in the tables.

[TABLE 3]

|  | Content of additional elements ($\times 10^{-4}$ % by mass) | | |
| --- | --- | --- | --- |
|  | Bi | In | Al |
| Electrolytic zinc foil A | 0.002 | 0 | 0 |
| Electrolytic zinc foil B | 0.022 | 0 | 0 |
| Electrolytic zinc foil C | 0.05 | 0 | 0 |
| Electrolytic zinc foil D | 0.05 | 0.08 | 0 |
| Electrolytic zinc foil E | 0.1 | 0 | 0 |
| Electrolytic zinc foil F | 0.219 | 0 | 0 |
| Electrolytic zinc foil G | 0.321 | 0 | 0 |
| Electrolytic zinc foil H | 0.644 | 0 | 0 |

[TABLE 4]

|  | Content of additional elements ($\times 10^{-4}$ % by mass) | | |
| --- | --- | --- | --- |
|  | Bi | In | Al |
| Rolled zinc foil K | 0 | 0 | 0 |
| Rolled zinc foil L | 0.01 | 0.02 | 0.01 |
| Rolled zinc foil M | 0.015 | 0 | 0 |
| Rolled zinc foil N | 0.05 | 0.1 | 0.01 |
| Rolled zinc foil O | 0.15 | 0 | 0 |
| Rolled zinc foil P | 0.8 | 0 | 0 |

[Flexibility evaluation test]

The electrolytic zinc foil C, the electrolytic zinc foil D, the rolled zinc foil K, the rolled zinc foil N, and the rolled zinc foil O were each cut into 30 mm × 15 mm to prepare evaluation samples. Then, each of the evaluation samples was bent at 90 degrees in the middle in the longitudinal direction and was checked for the presence or absence of cracks in the central portion.
Next, each of the evaluation samples was further bent so that both sides were in contact with each other (i.e., bending at 180 degrees) and was checked the presence or absence of cracks in the central portion.
Subsequently, each of the evaluation samples was bent to the opposite side so that both sides were in contact with each other (i.e., bending at 180 degrees in the opposite direction) and was checked the presence or absence of cracks in the central portion.
For the electrolytic zinc foil C, the rolled zinc foil K, and the rolled zinc foil O, no cracks were observed in any of the above bending stages. The electrolytic zinc foil D, containing 0.08% by mass (800 ppm) of In, was broken when it was bent at 90 degrees. The rolled zinc foil N, containing 0.1% by mass (1000 ppm) of In, was broken when it was bent at 180 degrees in the opposite direction.

The results above confirmed that, since the flexibility of the zinc foil is likely to be reduced by the presence of In, the In content should be low in order to ensure the productivity of the negative electrode and to impart flexibility to the sheet-shaped cell.

[Gas generation measurement test]

The electrolytic zinc foils A to H and the rolled zinc foils K to P were each cut into 60 mm × 20 mm. Then, a 5-mm wide portion along the edge on both sides of each zinc foil and the cutting plane were covered with an adhesive tape, thereby forming an exposed portion of 50 mm × 10 mm in the center of both sides of the zinc foil. Thus, evaluation samples were prepared.

The evaluation samples were configured so that only the exposed portions of the zinc foil were brought into contact with the electrolyte solution. Each of the evaluation samples was immersed in 15 g of the electrolyte solution containing a 20% by mass aqueous solution of ammonium chloride, and then maintained in a temperature environment of 60°C for 24 hours. The amount of hydrogen gas generated during this period was measured.

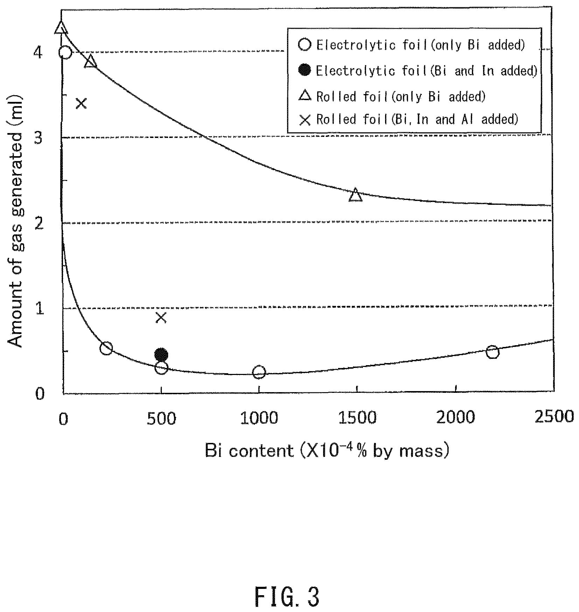

Table 5 shows the measurement results. FIG. 3 shows the results of the zinc foils with a Bi content of 0.25% by mass (2500 ppm) or less.

[TABLE 5]

|  | Amount of gas generated (ml) |
|---|---|
| Electrolytic zinc foil A | 4 |
| Electrolytic zinc foil B | 0.53 |
| Electrolytic zinc foil C | 0.3 |
| Electrolytic zinc foil D | 0.42 |
| Electrolytic zinc foil E | 0.24 |
| Electrolytic zinc foil F | 0.46 |
| Electrolytic zinc foil G | 0.54 |
| Electrolytic zinc foil H | 0.85 |
| Rolled zinc foil K | 4.3 |
| Rolled zinc foil L | 3.4 |
| Rolled zinc foil M | 3.9 |
| Rolled zinc foil N | 0.89 |
| Rolled zinc foil O | 2.32 |
| Rolled zinc foil P | 1.58 |

In the electrolytic zinc foil, the amount of hydrogen gas generated can be significantly reduced because of the addition of Bi, as compared to the rolled zinc foil. The results clearly show that the use of the electrolytic zinc foil as a negative electrode to form a cell can greatly improve the storage characteristics of the cell. On the other hand, in the rolled zinc foil, the effect of the addition of Bi is limited, while In is more effective in reducing the amount of hydrogen gas generated. Thus, it is found that the rolled zinc foil differs from the electrolytic zinc foil in the action of the additional element.

[Discharge characteristic evaluation test]

Next, sheet-type air cells for evaluating discharge characteristics were assembled using the electrolytic zinc foils A to C, E, and F, and the discharge characteristics of each of the sheet-type air cells were evaluated by measuring the operating voltage.

Each of the electrolytic zinc foils was punched into a shape including a main body portion of 15 mm × 15 mm and a negative electrode terminal of 5 mm × 15 mm. Thus, negative electrodes were produced. Moreover, an air electrode containing carbon black as a catalyst, a separator made of a laminated film of a cellophane film and a graft film, a water repellent membrane made of a PE microporous film, an electrolyte solution containing a 20% by mass aqueous solution of ammonium chloride, and a resin film exterior case having air holes on one side were used. Each of the negative electrodes was combined with the air electrode, the separator, the water repellent membrane, and the electrolyte solution, which were then inserted in the resin film exterior case with the air holes located near the air electrode. Consequently, a plurality of sheet-type air cells were produced.

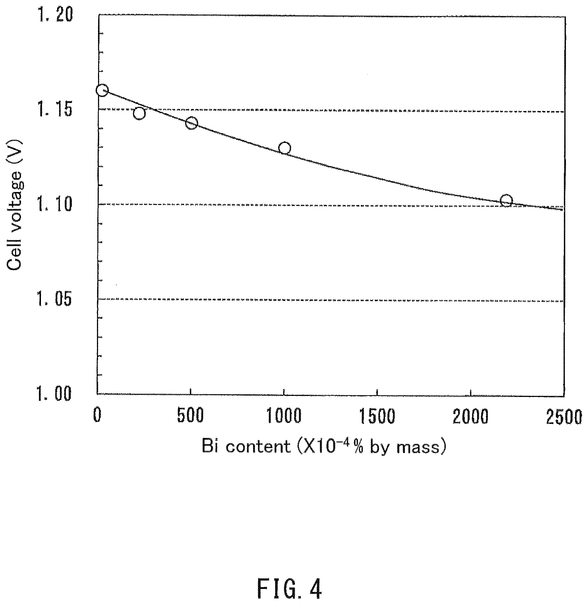

Each of the sheet-type air cells was connected to a discharge resistance of 3.9 kΩ and discharged. The cell voltage (CCV) was measured at the time the discharged electricity reached 10 mAh to evaluate the discharge characteristics. FIG. 4 shows the results.

As is evident from the results in FIG. 4, the higher the Bi content in the electrolytic zinc foil of the negative electrode, the greater the reaction resistance during discharge of the negative electrode and the lower the operating voltage of the cell. Therefore, the Bi content of the electrolytic zinc foil should be low in terms of the discharge characteristics of the cell.

[Measurement of resistance value of negative electrode]

Zinc alloy particles (average particle size: 30 pm) containing additional elements: 500 ppm of In, 400 ppm of Bi, and 10 ppm of Al (where the contents of the additional elements were expressed in terms of mass) were used. A negative electrode mixture containing composition was prepared by mixing 70 parts by mass of the zinc alloy particles, 20 parts by mass of graphite ("SP-20" manufactured by Nippon Graphite Industries, Co., Ltd., average particle size: 30 pm), 10 parts by mass of ammonium polyacrylate, and 150 parts by mass of water.

A 50 mm × 50 mm aluminum laminated film (thickness: 65 pm) was used. The aluminum laminated film included an aluminum foil, a PET film on the outer surface of the aluminum foil, and a polypropylene film (heat-sealing resin layer) on the inner surface of the aluminum foil. A carbon conductive paste was printed on the surface of the polypropylene film of the aluminum laminated film by screen printing so that the thickness would be 0.05 mm after drying, thus forming a current collecting layer. Then, the negative electrode mixture containing composition was applied to the surface of the current collecting layer. Thus, a negative electrode S having a negative electrode mixture layer with a thickness of 0.4 mm was produced.

Moreover, a negative electrode T was produced in the same manner as Example 1 except that the electrolytic zinc foil with the same composition as that in Example 1 had a thickness of 60 pm.

A four-point probe of a resistivity meter ("Loresta GP" manufactured by Mitsubishi Chemical Corporation) was pressed against the surface of each of the negative electrodes to measure a surface resistivity. The negative electrode S had a surface resistivity of was 30 Ω/□, while the negative electrode T made of the electrolytic zinc foil had a surface resistivity of 0.0013 Ω/□, which was significantly reduced compared to the negative electrode S. The results confirm that the use of the zinc foil as a negative electrode can reduce the resistance value of the negative electrode.

The invention can be embodied in other forms without departing from the essential characteristics thereof. The embodiments disclosed in this application are to be considered in all respects as illustrative and not limiting. The scope of the invention is indicated by the appended claims rather than by the foregoing description, and all changes that come within the meaning and range of equivalency of the claims are intended to be embraced therein.

Industrial Applicability

The cell of the present invention can be used for the same purposes as those for which various conventional primary and secondary cells have already been used.

Description of Reference Numerals

    1 Sheet-type cell
    10 Positive electrode
    11 Positive electrode terminal
    20 Negative electrode
    21 Negative electrode terminal
    30 Separator
    40 Sheet-type exterior case

**Claims**

1. A cell comprising a positive electrode, a negative electrode, and a separator interposed between the positive electrode and the negative electrode,
   wherein the positive electrode includes a porous carbon sheet and a positive electrode active material layer containing a positive electrode active material that is held in pores of the porous carbon sheet.

2. The cell according to claim 1, wherein the positive electrode active material layer covers a surface of the porous carbon sheet facing the separator, and a part of the positive electrode active material layer is held in the pores of the porous carbon sheet, and
   a surface of the positive electrode active material layer facing the separator has an arithmetic average roughness (Ra) of 10 pm or less or a maximum height roughness (Rz) of 50 pm or less.

3. The cell according to claim 2, wherein the arithmetic average roughness (Ra) of the surface of the positive electrode active material layer facing the separator is 5 pm or less.

4. The cell according to any one of claims 1 to 3, wherein the positive electrode active material has an average particle size of 30 pm or less.

5. The cell according to any one of claims 1 to 4, wherein the separator is made of a nonwoven fabric.

6. The cell according to claim 5, wherein the nonwoven fabric has a thickness of 500 pm or less.

7. The cell according to claim 5 or 6, wherein the nonwoven fabric has a porosity of 90% by volume or less.

8. The cell according to any one of claims 1 to 7, wherein the negative electrode is made of a zinc alloy foil containing 0.01 to 0.25% by mass of Bi.

9. The cell according to claim 8, wherein the zinc alloy foil is an electrolytic zinc foil with an In content of 0.04% by mass or less.

10. The cell according to any one of claims 1 to 9, wherein the porous carbon sheet is a porous sheet made of fibrous carbon.

11. The cell according to any one of claims 1 to 10, containing an aqueous solution with a pH of 3 or more and 12 or less as an electrolyte.

FIG. 1

FIG. 2

FIG. 3

FIG. 4

## INTERNATIONAL SEARCH REPORT

International application No.

**PCT/JP2021/029268**

### A.    CLASSIFICATION OF SUBJECT MATTER

*H01M 4/02*(2006.01)i; *H01M 4/06*(2006.01)i; *H01M 4/13*(2010.01)i; *H01M 4/24*(2006.01)i; *H01M 4/42*(2006.01)i; *H01M 4/66*(2006.01)i; *H01M 4/80*(2006.01)i; *H01M 10/04*(2006.01)i; *H01M 10/28*(2006.01)i; *H01M 6/04*(2006.01)i; *H01M 6/12*(2006.01)i; *H01M 6/14*(2006.01)i; *H01M 50/44*(2021.01)i; *H01M 50/489*(2021.01)i; *H01M 50/491*(2021.01)i

FI:    H01M6/12 Z; H01M4/02 Z; H01M4/06 A; H01M4/06 Q; H01M4/06 T; H01M4/06 V; H01M4/13; H01M4/24 H; H01M4/42; H01M4/66 A; H01M4/80 C; H01M6/04; H01M6/14 Z; H01M10/04 Z; H01M10/28 Z; H01M50/44; H01M50/489; H01M50/491

According to International Patent Classification (IPC) or to both national classification and IPC

### B.    FIELDS SEARCHED

Minimum documentation searched (classification system followed by classification symbols)

H01M6/12; H01M4/02; H01M4/06; H01M4/13; H01M4/24; H01M4/42; H01M4/66; H01M4/80; H01M6/04; H01M6/14; H01M10/04; H01M10/28; H01M50/44; H01M50/489; H01M50/491

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| X | JP 2016-031922 A (HONDA MOTOR CO., LTD.) 07 March 2016 (2016-03-07) paragraphs [0019], [0020], [0027], [0034], fig. 1, 2 | 1, 4 |
| Y | | 1-11 |
| X | US 2010/0178543 A1 (THE REGENTS OF THE UNIVERSITY OF CALIFORNIA) 15 July 2010 (2010-07-15) paragraphs [0013]-[0015], [0024], [0157], [0158], fig. 6, 7, 35 | 1 |
| Y | | 1-11 |
| X | JP 55-150553 A (MATSUSHITA ELECTRIC INDUSTRIAL CO., LTD) 22 November 1980 (1980-11-22) page 2, upper right column, line 1 to lower left column, line 6, fig. 1 | 1 |

☑ Further documents are listed in the continuation of Box C.       ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **12 October 2021** | **26 October 2021** |

| Name and mailing address of the ISA/JP | Authorized officer |
|---|---|
| **Japan Patent Office (ISA/JP)**<br>3-4-3 Kasumigaseki, Chiyoda-ku, Tokyo 100-8915<br>Japan | |
| | Telephone No. |

Form PCT/ISA/210 (second sheet) (January 2015)

**INTERNATIONAL SEARCH REPORT**

International application No.

**PCT/JP2021/029268**

| C. | DOCUMENTS CONSIDERED TO BE RELEVANT | |
|---|---|---|
| Category* | Citation of document, with indication, where appropriate, of the relevant passages | Relevant to claim No. |
| X | US 2012/0295161 A1 (HON HAI PRECISION INDUSTRY CO., LTD.) 22 November 2012 (2012-11-22) paragraphs [0020], [0023], [0029], fig. 2, 8 | 1 |
| Y | WO 2019/177025 A1 (MAXELL HOLDINGS, LTD.) 19 September 2019 (2019-09-19) paragraphs [0039], [0040], [0057]-[0059], [0074], [0092], [0093], [0096], [0098] | 1-11 |
| P, A | WO 2020/162591 A1 (MAXELL HOLDINGS, LTD.) 13 August 2020 (2020-08-13) | 1-11 |

Form PCT/ISA/210 (second sheet) (January 2015)

INTERNATIONAL SEARCH REPORT
Information on patent family members

International application No.

**PCT/JP2021/029268**

| Patent document cited in search report | | | Publication date (day/month/year) | Patent family member(s) | | | Publication date (day/month/year) |
|---|---|---|---|---|---|---|---|
| JP | 2016-031922 | A | 07 March 2016 | US 2016/0036059 A1 paragraphs [0059]-[0061], [0078], [0093], [0094], fig. 1, 2 | | | |
| US | 2010/0178543 | A1 | 15 July 2010 | WO | 2008/124167 | A1 | |
| JP | 55-150553 | A | 22 November 1980 | (Family: none) | | | |
| US | 2012/0295161 | A1 | 22 November 2012 | CN | 102790201 | A | |
| | | | | TW | 201248983 | A | |
| WO | 2019/177025 | A1 | 19 September 2019 | US 2021/0091385 A1 paragraphs [0051], [0070]-[0072], [0087], [0091], [0105], [0106], [0109] | | | |
| | | | | EP | 3767738 | A1 | |
| WO | 2020/162591 | A1 | 13 August 2020 | (Family: none) | | | |

Form PCT/ISA/210 (patent family annex) (January 2015)

**REFERENCES CITED IN THE DESCRIPTION**

**Patent documents cited in the description**

- JP 2008535194 A
- JP 2010045047 A
- JP H51993217587 A